(19) Europäisches Patentamt
European Patent Office
Office européen des brevets

(11) **EP 0 860 632 B1**

(12) **EUROPÄISCHE PATENTSCHRIFT**

(45) Veröffentlichungstag und Bekanntmachung des Hinweises auf die Patenterteilung:
**04.08.1999 Patentblatt 1999/31**

(51) Int Cl.$^6$: **F16H 61/14**

(21) Anmeldenummer: **98102179.3**

(22) Anmeldetag: **09.02.1998**

(54) **Verfahren zur Steuerung eines Schaltvorganges zwischen einem aktivierten und einem deaktivierten Zustand einer Wandlerkupplung**

Method to control the switch between an engaged and a disengaged state of a torque converter lockup clutch

Méthode de commande de changement entre un état embrayé et désembrayé d'un embrayage à pontage d'un convertisseur de couple

(84) Benannte Vertragsstaaten:
**DE FR GB**

(30) Priorität: **14.02.1997 DE 19705693**

(43) Veröffentlichungstag der Anmeldung:
**26.08.1998 Patentblatt 1998/35**

(73) Patentinhaber: **ZF FRIEDRICHSHAFEN Aktiengesellschaft**
**88038 Friedrichshafen (DE)**

(72) Erfinder:
• **Jauch, Friedemann, Dr.**
**88074 Meckenbeuren (DE)**

• **Zeller, Heinrich**
**88048 Friedrichshafen (DE)**

(56) Entgegenhaltungen:
EP-A- 0 707 165    US-A- 4 993 527
US-A- 5 531 302

• **"Wandlerkupplung" ATZ AUTOMOBILTECHNISCHE ZEITSCHRIFT , Bd. 96, Nr. 11, 1994, STUTTGART, DE, Seiten 690-697, XP000478695**

**Beschreibung**

Die Erfindung betrifft ein Verfahren zur Steuerung eines Schaltvorganges zwischen einem aktivierten und einem deaktivierten Zustand einer Wandlerkupplung, insbesondere einer geregelten Wandlerüberbrückungskupplung, mit einem Sollschlupf, wobei die Wandlerkupplung eine Regelstrecke darstellt, welche in einem Regelkreis, der eine Führungsgröße und eine Regelgröße aufweist, einem Regler nachgeschaltet ist.

Aus der Praxis sind für Kraftfahrzeuge mit Automatgetriebe Wandlerkupplungen und geregelte Wandlerüberbrückungskupplungen bekannt, die im geöffneten bzw. deaktivierten und einem aktivierten Zustand betrieben werden können, wobei der aktivierte Zustand sowohl den geregelt schlupfenden als auch den geschlossenen Betriebszustand umfaßt.

Eine derartige Wandlerüberbrückungskupplung ist beispielsweise in der ATZ Automobiltechnische Zeitschrift 96 (1994) 11 beschrieben. Bei dieser bekannten Wandlerüberbrückungskupplung wird der Wandlerschlupf als Regelgröße durch Subtraktion der wichtigsten Eingangsgrößen, nämlich Motordrehzahl und Turbinendrehzahl, berechnet. Die Führungsgröße ist der Sollschlupf der Wandlerüberbrückungskupplung, welche in einem Kennfeld im elektronischen Getriebesteuergerät (EGS) vorgegeben ist. Durch Vergleich von Soll- und Ist-Schlupf ergibt sich eine Regelabweichung, welche mit einem PI-Regler ausgeregelt wird, der mit einem großen Proportionalanteil und mit einem relativ geringen Integralanteil arbeitet.

Als Stellglied für die Druckansteuerung dieser Wandlerüberbrückungskupplung dient ein elektrischer Drucksteller (EDS), der vom elektronischen Getriebesteuergerät (EGS) über eine stromgeregelte Endstufe angesteuert wird. Der EDS wandelt entsprechend seiner Kennlinie den vorgegebenen Versteuerstrom in einen proportionalen Hydraulikdruck um. Durch diesen EDS-Druck werden z. B. bei einem 2-Leitungswandler mit zwei Steuerventilen sowohl der Wandlerdruck, der auf die Rückseite des Wandlerkupplungskolbens wirkt, als auch der Wandlerkupplungsdruck, der den Wandlerkupplungskolben schließt, gesteuert.

Die Wandlerüberbrückungskupplung wird als "offen" bzw. "deaktiviert" bezeichnet, wenn kein Moment über die Wandlerüberbrückungskupplung übertragen wird. Dieser Betriebszustand kann bei gewissen Geschwindigkeitsbereichen, wie z. B. sehr niedrigen oder sehr hohen Geschwindigkeiten, bei sehr niedrigen Temperaturen mit einem schlechten Regelverhalten oder bei sehr hohen Getriebetemperaturen und einer drohenden Überhitzung der Kupplungsreibfläche gewünscht sein.

Im "aktivierten" Zustand wird der Kolben der Wandlerüberbrückungskupplung mit Druck beaufschlagt. Über die resultierende Kolbenkraft wird wenigstens eine Reiblamelle angepreßt und ein entsprechendes Übertragungsmoment erzeugt.

Der Übergang von dem offenen bzw. deaktivierten Zustand in den geregelten bzw. aktivierten Zustand wird durch einen relativ langsamen Regler vorgenommen. Der Sollschlupf wird bei dieser bekannten Ausführung als konstanter Wert vorgegeben, weshalb der Reglerparameter zur Erlangung eines gewünschten Verhaltens entsprechend verändert werden muß. Nach dem Einregeln wird auf einen anderen Parametersatz umgeschaltet, d. h. beim Übergang vom deaktivierten auf den aktivierten Zustand oder umgekehrt wird jeweils auf einen anderen Regler-Parametersatz zurückgegriffen.

Auf diese bekannte Art und Weise wird ein langsames Heranführen an den Sollschlupf mit einem zufriedenstellenden Fahrkomfort ermöglicht, jedoch ist hierfür nachteilhafterweise ein aufwendiges und unübersichtliches Steuerungs- und Regelungsverfahren mit einer hohen Anzahl an abstimmbaren Parametersätzen erforderlich.

Es ist daher Aufgabe der vorliegenden Erfindung, ein Verfahren bereitzustellen, mit dem der Übergang von einem aktivierten in einen deaktivierten Zustand oder umgekehrt bei einer Wandlerkupplung eines Automatgetriebes auf einfache und übersichtliche Art und Weise mit einer möglichst geringen Anzahl an Regler-Parametern durchführbar ist, wobei gleichzeitig ein hoher Fahrkomfort gewährleistet ist.

Diese Aufgabe wird durch die im kennzeichnenden Teil des Anspruches 1 aufgeführten Verfahrensschritte gelöst.

Das erfindungsgemäße Verfahren bietet den Vorteil, daß durch die Variierung des Sollschlupfes während des Überganges zwischen einem offenen bzw. deaktivierten und einem aktivierten Zustand der Wandlerkupplung nur ein einziger Reglerparametersatz benötigt wird, da der Regler auf sein schnellstes Verhalten eingestellt werden kann und nicht variiert werden muß. Dies gilt sowohl für einen Einregelvorgang als auch für einen Regelvorgang.

Durch die erfindungsgemäße Veränderung des Sollschlupfes wird der Übergang zwischen offenem und aktiviertem Zustand der Wandlerkupplung jedoch nicht nur einfacher gestaltet, sondern für einen Fahrzeuginsassen auch kaum spürbar, wodurch der angestrebte hohe Fahrkomfort erzielt wird.

Weitere Vorteile der Erfindung ergeben sich aus den Unteransprüchen und der nachfolgenden, auf die prinzipmäßige Zeichnung bezugnehmenden Beschreibung der Erfindung. Es zeigt:

Fig. 1    ein Flußdiagramm eines Verfahrens zur Steuerung eines Schaltvorganges von einem deaktivierten in einen aktivierten Zustand einer geregelten Wandlerkupplung;

Fig. 2    ein Flußdiagramm eines Verfahrens zur Steuerung eines Schaltvorganges von einem aktivierten in einen deaktivierten Zustand einer geregelten Wandlerkupplung;

Fig. 3 ein Flußdiagramm der Verfahrensschritte des Verarbeitungsmoduls zur Sollschlupf-Reduktion nach Fig. 1;

Fig. 4 ein Flußdiagramm der Verfahrensschritte des Verarbeitungsmoduls zur Sollschlupf-Erhöhung nach Fig. 2;

Fig. 5 ein Diagramm mit dem Verlauf des Sollschlupfs über der Zeit bei einer Aktivierung der Wandlerkupplung und

Fig. 6 ein Diagramm mit dem Verlauf des Sollschlupfs über der Zeit bei einer Deaktivierung der Wandlerkupplung.

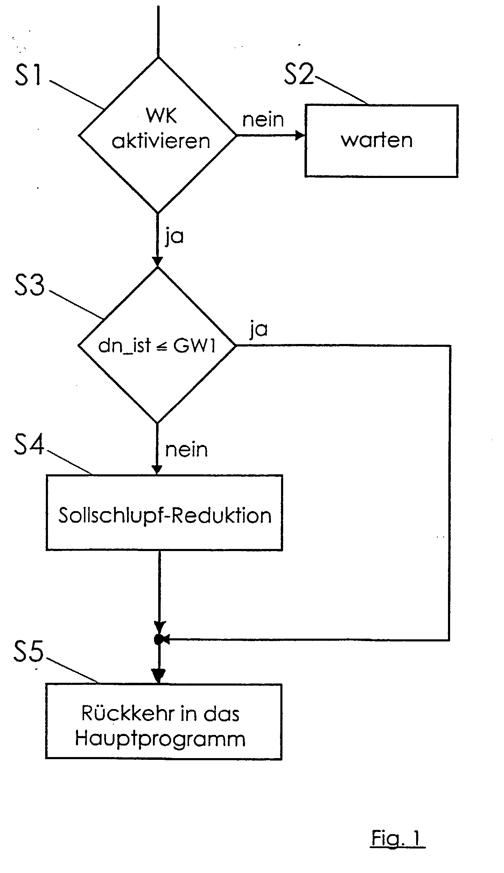

Bezug nehmend auf die Fig. 1 bis 6 ist ein Verfahren zur Steuerung eines Schaltvorganges zwischen einem aktivierten und einem deaktivierten Zustand einer geregelten Wandlerkupplung mit einem Sollschlupf dargestellt. Die Wandlerkupplung stellt dabei eine Regelstrecke dar, welche auf bekannte Art in einem Regelkreis, der eine Führungsgröße und eine Regelgröße aufweist, einem Regler nachgeschaltet ist.

Wie in Fig. 1 ersichtlich ist, wird in einer ersten Unterscheidungsfunktion S1 zunächst geprüft, ob ein Schaltbefehl zur Aktivierung der Wandlerkupplung (WK) vorliegt. Ist dies nicht der Fall, wird eine Warteschleife S2 gestartet. Wenn jedoch in der ersten Unterscheidungsfunktion S1 ein Befehl zur Aktivierung der Wandlerkupplung erkannt wird, wird eine weitere Unterscheidungsfunktion S3 gestartet, in welcher geprüft wird, ob ein vorhandener Ist-Schlupf dn_ist kleiner oder gleich einem ersten Grenzwert GW1 ist. Nur wenn diese Bedingung nicht erfüllt ist, soll eine Sollschlupfvorgabe aktiviert werden, ansonsten erfolgt der Übergang allein durch Regeln des Sollschlupfes aus einem Schlupfkennfeld.

Der erste Grenzwert GW1 stellt eine Summe aus einem vorgegebenen Ziel-Sollwert dn_soll_ziel und einem Schwellschlupf dn_schwell dar, wobei der Schwellschlupf dn_schwell konstant sein kann oder von einem Motor-Drehmoment T_Mot und einer Motor-Drehzahl n_Mot abhängig sein kann.

Ergibt die Unterscheidungsfunktion S3 das Ergebnis, daß der vorhandene Ist-Schlupf dn_ist größer als der erste Grenzwert GW1 ist, wird ein Verarbeitungsmodul S4 zur Sollschlupf-Reduktion auf einen vorgebenen Sollschlupf dn_soll gestartet.

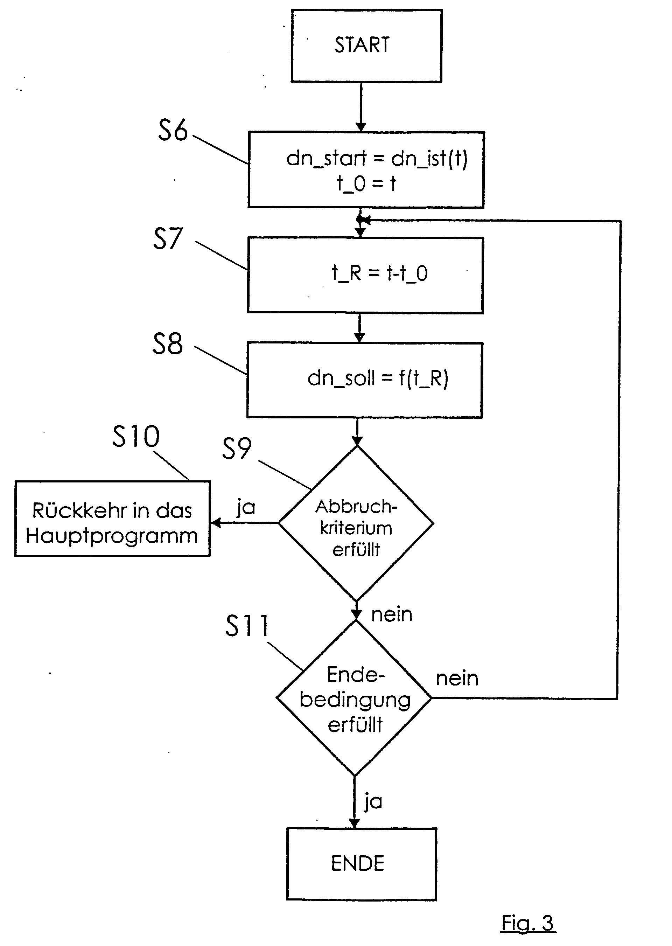

Ein derartiges Verarbeitungsmodul S4 ist in Fig. 3 schematisch als Flußdiagramm dargestellt. Nach dem Start des Verarbeitungsmodules S4 wird darin in einer ersten Verarbeitungsfunktion S6 der momentane Schlupfwert dn_start bei Beginn des Schaltbefehles zu einer Startzeit t_0 als Sollschlupf-Startwert eingelesen. In einer nachfolgenden Verarbeitungsfunktion S7 wird eine Zeitschleife t_R für die Reduktionszeit t_R gestartet, welche eine Differenz aus einer aktuellen Zeit t minus der Startzeit t_0 darstellt.

Für die Dauer des Übergangs von dem Start-Schlupfwert dn_start auf den vorgegebenen Ziel-Schlupfwert dn_ziel wird der Sollschlupf dn_soll in einer weiteren Verarbeitungsfunktion S8 gemäß einer Übergangsfunktion in Abhängigkeit von der Reduktionszeit t_R ermittelt.

Die Reduzierung des Sollschlupfwertes dn_soll über der Zeit erfolgt in dem Verarbeitungsmodul S4 anhand einer Übergangsfunktion, deren Verlauf sich durch einen applizierbaren Progressionsfaktor P einstellen läßt. Eine geeignete Übergangs funktion zur Reduktion des Schlupfwertes dn_soll über die Reduktionszeit t_R läßt sich wie folgt angeben:

$$dn\_soll(t\_R) = dn\_start - [dn\_start - dn\_soll\_ziel] *$$

$$(t\_R/T\_R) \, EXP \, (1/P) + dn\_soll\_basis$$

wobei t_R für die Reduktionszeit, T_R für die vorgegebene Dauer der Sollschlupf-Reduktion, dn_start für den Start-Sollschlupf, dn_soll_ziel für den vorgegebenen Ziel-Sollschlupf, dn_soll_basis für einen vorgegebenen Basis-Sollschlupf und P für einen Progressionsfaktor stehen.

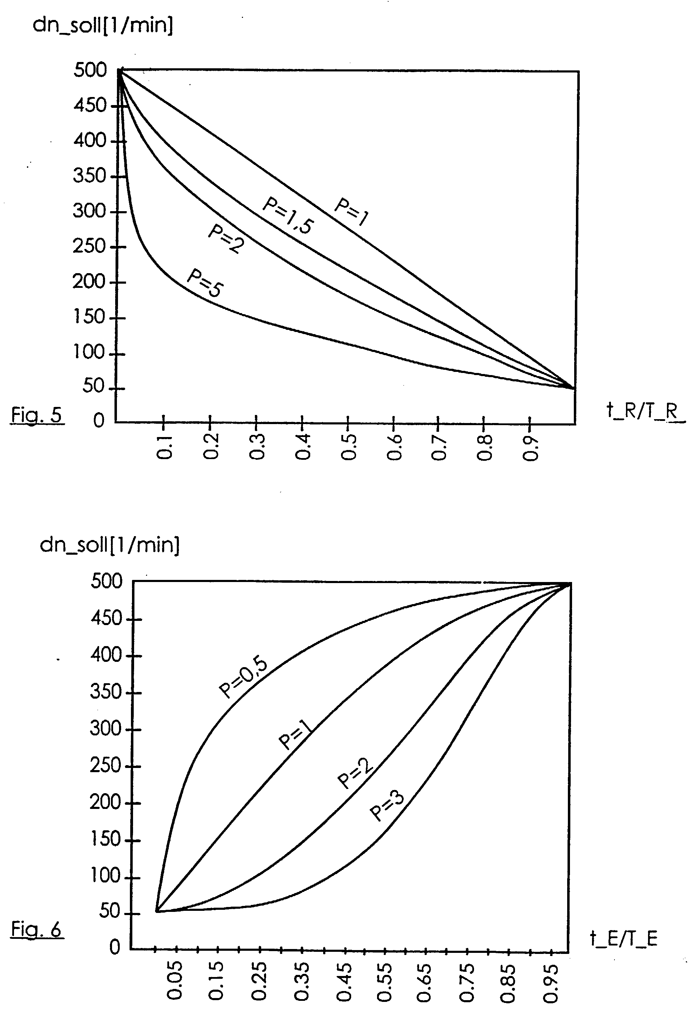

Ein Sollschlupfverlauf gemäß dieser Funktion ist in Fig. 5 prinzipmäßig dargestellt, wobei für den Progressionsfaktor P die Werte 1, 1.5, 2, 5 eingesetzt wurden. Wie in Fig. 5 ersichtlich ist, läßt sich mit einem Progressionsfaktor, welcher den Wert 1 hat, der lineare Verlauf der Sollschlupf-Reduktion exakt darstellen.

Alternativ zu der oben aufgeführten Übergangsfunktion kann zur Sollschlupf-Reduktion in dem Verarbeitungsmodul S4 ebenso folgende Übergangs funktion verwendet werden:

$$dn\_soll(t\_R) = dn\_start - [dn\_start - dn\_soll\_ziel] *$$

$$sin((\pi/2)*(t\_R/T\_R) \, EXP \, (P) + dn\_soll\_basis$$

Graphisch dargestellt verläuft der Sollschlupf dn_soll (t_R) mit dieser Funktion "bauchiger", wobei sich bei Einsetzen eines Progressionsfaktors P mit dem Wert 1 anfangs ein quasi-linearer Verlauf ergibt.

Bei beiden oben genannten Übergangsfunktionen wird die Dauer der Sollschlupf-Reduktion T_R in Abhängigkeit von einer zu überbrückenden Schlupfdrehzahl dn_soll_diff und eines Gradienten der Turbinendrehzahl n_Turb_grad gemäß der Funktion (T_R = f(dn_soll_diff, n_Turb_grad)) ermittelt und vorgegeben. Die zu überbrückende Schlupfdrehzahl dn_soll_diff stellt dabei eine Differenz zwischen Ziel-Sollschlupf dn_soll_ziel und Startschlupf dn_start gemäß der Funktion [dn_soll_diff = dn_soll_ziel - dn_start] dar.

Des weiteren läßt sich in dem Verarbeitungsmodul S4 zur Sollschlupf-Reduktion der Sollschlupf dn_soll als Alternative zu den oben genannten Übergangsfunktionen gemäß folgender Funktion ermitteln:

$$dn\_soll(t\_R) = dn\_start - dn\_soll\_grad * t\_R +$$

$$dn\_soll\_basis$$

wobei dn_soll_grad für einen Sollschlupf-Gradienten steht, welcher von einem Gradienten der Turbinendrehzahl n_Turb_grad abhängig ist, und dn_soll_basis einen vorgegebenen Basis-Sollschlupf darstellt.

Bei der Abarbeitung der Verarbeitungsfunktion S8 mit einer der zuvor genannten Übergangsfunktionen zur Reduzierung des Sollschlupfes dn_soll während der Reduktionszeit t_R wird in einer Unterscheidungsfunktion S9 geprüft, ob ein Abbruchkriterium erfüllt ist. So wird das Verarbeitungsmodul S4 zur Sollschlupf-Reduktion abgebrochen, wenn ein Befehl "Deaktivieren der Wandlerkupplung", ein Schubbetrieb oder ein Befehl "Sollschlupf-Erhöhung" erkannt wird. Wenn eines dieser Abbruchkriterien in der Unterscheidungsfunktion S9 erkannt wird, wird in eine Verarbeitungsfunktion S10 zur Rückkehr in das Hauptprogramm verzweigt.

Falls keines dieser Abbruchkriterien als erfüllt angesehen wird, wird in einer weiteren Unterscheidungsfunktion S11 geprüft, ob eine Endebedingung zur Beendigung des Verarbeitungsmodules S4 erfüllt ist. In dem vorliegenden Ausführungsbeispiel wird das Verarbeitungsmodul S4 beendet, wenn der Sollschlupf dn_soll kleiner oder gleich einer Summe aus dem vorgegebenen Ziel-Sollschlupf dn_soll_ziel und dem Schwell-Sollschlupf dn_soll_schwell ist. Danach wird wieder in das Unterprogramm zur Aktivierung der Wandlerkupplung zurückverzweigt. Wird jedoch in der Unterscheidungsfunktion S11 des Verarbeitungsmodules S4 zur Sollschlupf-Reduktion festgestellt, daß keine der Endebedingungen erfüllt ist, wird in die Zeitschleife S7 zurückverzweigt und das Verarbeitungsmodul S4 weiter abgearbeitet.

Nach der Abarbeitung des Verarbeitungsmodules S4 zur Sollschlupf-Reduktion und der Rückkehr in das Unterprogramm zur Aktivierung der Wandlerkupplung wird eine Verarbeitungsfunktion S5 zur Rückkehr in das Hauptprogramm gestartet.

Sollte dagegen in der Unterscheidungsfunktion S3 des Unterprogramms zur Aktivierung der Wandlerkupplung erkannt werden, daß der vorhandene Ist-Schlupf dn_ist kleiner oder gleich dem ersten Grenzwert GW1 ist, wird sofort von der Unterscheidungsfunktion S3 in die Verarbeitungsfunktion S5 zur Rückkehr in das Hauptprogramm verzweigt.

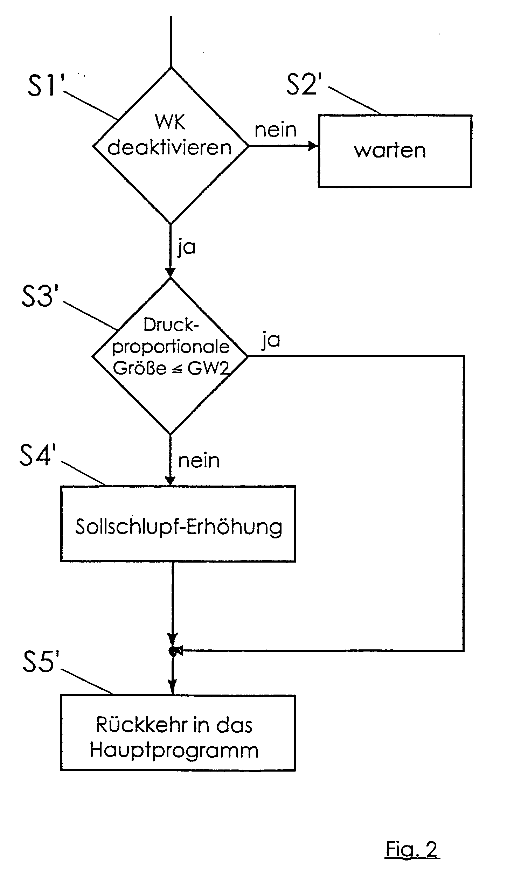

Analog zu dem oben beschriebenen Unterprogramm zur Aktivierung der Wandlerkupplung wird ein Unterprogramm zur Deaktivierung der Wandlerkupplung gestartet. Ein Unterprogramm zur Deaktivierung der Wandlerkupplung ist in Fig. 2 ersichtlich.

Wenn in der ersten Unterscheidungsfunktion S1' in Fig. 2 ein Befehl zur Deaktivierung der Wandlerkupplung erkannt wird, wird zunächst eine Unterscheidungsfunktion S3' gestartet, in der geprüft wird, ob eine druckproportionale Größe kleiner oder gleich einem jeweils vorgegebenen Grenzwert GW2 ist. Ist dies nicht der Fall, wird eine Warteschleife S2' aktiviert.

Die druckproportionale Größe in der Unterscheidungsfunktion S3' kann ein vorhandener Wandlerkupplungsdruck p_WK, ein vorhandenes Kupplungsdrehmoment T_WK oder ein vorhandenes Motordrehmoment T_Mot sein. Die druckproportionale Größe wird zweckmäßigerweise als Mittelwert aus einem aktuellen und einem vorherigen Wert gebildet.

Der Grenzwert GW2 richtet sich danach, welche druckproprotionale Größe gewählt wird. So wird als Grenzwert GW2 für den Wandlerkupplungsdruck p_WK ein Schwell-Druck p_WK_schwell, für das Kupplungsdrehmoment T_WK ein Kupplungs-Schwell-Drehmoment T_WK_schwell und für das Motor-drehmoment T_Mot ein Motor-Schwell-Drehmoment T_Mot_schwell vorgegeben. Der Schwellwert kann dabei konstant sein oder von der Motordrehzahl n_Mot abhängig sein.

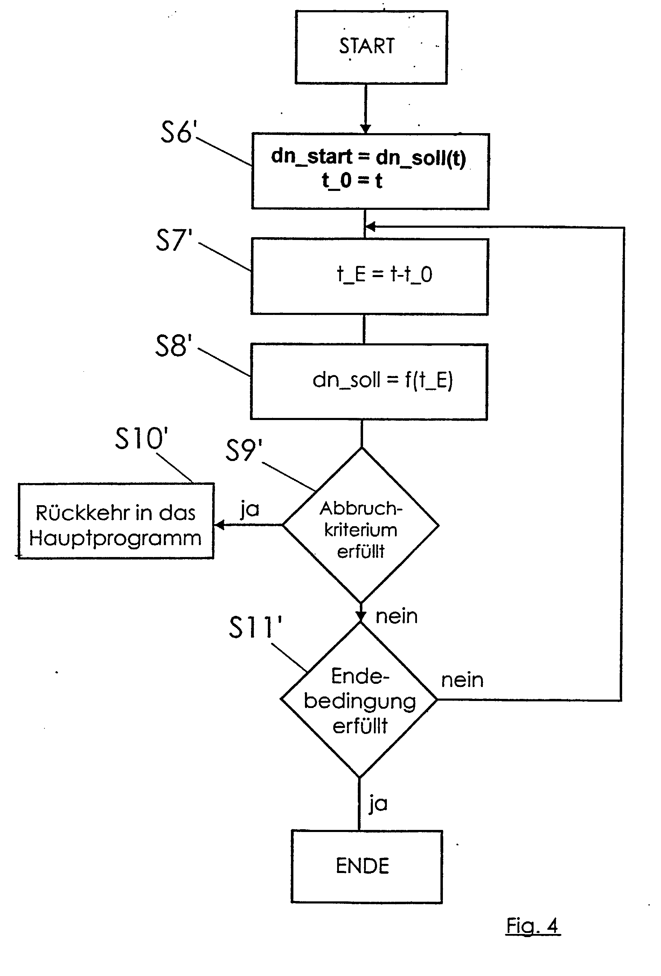

Wird in der Unterscheidungsfunktion S3' festgestellt, daß die gewählte druckproportionale Größe größer als der jeweils vorgegebene Grenzwert GW2 ist, wird ein Verarbeitungsmodul S4' zur Sollschlupf-Erhöhung gestartet, wie es in Fig. 4 schematisch dargestellt ist.

Das Deaktivieren der Wandlerkupplung wird analog zur Aktivierung der Wandlerkupplung über eine Sollschlupfvorgabe realisiert. Der Startwert, welcher in einer ersten Verarbeitungsfunktion S6' des Verarbeitungsmodules S4' zu einer Startzeit t_0 beim Beginn der Schaltung eingelesen wird, ist der aktuelle eingeregelte Sollschlupf dn_start. Der Ziel-Schlupfwert dn_soll_ziel bei einem offenen bzw. deaktivierten Wandler ist in einem Kennfeld abhängig von einem Drosselklappenwinkel Dki und der Turbinendrehzahl abgelegt.

In einer Verarbeitungsfunktion S7' wird in dem Verarbeitungsmodul S4' zur Sollschlupf-Erhöhung eine Zeitschleife gemäß der Funktion (t_E = t - t_0) mit einer Erhöhungszeit t_E, der aktuellen Zeit t und der Startzeit t_0 gestartet. Die Übergangsdauer bzw. die Erhöhungszeit T_E soll abhängig von der zu überbrückenden Schlupfdrehzahl dn_soll_diff und dem Gradient der Turbinendrehzahl n_Turb_grad dient. Die zu überbrückende Schlupfdrehzahl dn_soll_diff stellt dabei eine Differenz zwischen dem Soll-Zielschlupf dn_soll_ziel und dem Startschlupf dn_start dar.

Während der Übergangszeit wird der Soll-schlupf in dem Verarbeitungsmodul S4' zur Sollschlupf-Erhöhung in einer Verarbeitungsfunktion S8' mit einer Übergangsfunktion in Abhängigkeit der Erhöhungszeit t_E ermittelt.

Eine geeignete Übergangsfunktion zur Sollschlupferhöhung läßt sich wie folgt wiedergeben:

dn_soll(t_E) = dn_start + [dn_soll_ziel - dn_start] * (t_E/T_E)^(1/P) + dn_soll_basis

worin t_E die Erhöhungszeit, T_E die vorgegebene Dauer der Sollschlupf-Erhöhung, dn_start den Start-Sollschlupf, dn_soll ziel den vorgebenen Ziel-Soll-schlupf, dn_soll_basis den vorgegebenen Basis-Soll-schlupf und P den Progressionsfaktor darstellen.

Alternativ hierzu läßt sich der Sollschlupf während der Sollschlupf-Erhöhung in dem Verarbeitungsmodul S4' gemäß folgender Übergangs funktion ermit-teln:

dn_soll(t_E) = dn_start + [dn_soll_ziel - dn_start] *

sin((π/2)*(t_E/T_E) EXP P) + dn_soll_basis

Der Verlauf des Sollschlupfes während der Sollschlupf-Erhöhung nach dieser Übergangsfunktion ist in Fig. 6 dargestellt, wobei sich die unterschiedlichen Kurven aus der Verwendung unterschiedlicher Progressionsfaktoren mit den Werten 0.5, 1, 2, 3 ergeben. Wie aus Fig. 6 ersichtlich ist, verlaufen die Kurven "bauchig", wobei sich bei Verwendung eines Progressionsfaktors mit dem Wert 1 anfangs ein quasi-linearer Verlauf ergibt.

Eine weitere Übergangsfunktion zur Soll-schlupf-Erhöhung als Alternative zu den beiden zuletzt genannten Übergangsfunktionen läßt sich wie folgt an-geben:

dn_soll(t_E) = dn_start + dn_soll_grad * t_E +

dn_soll_basis

worin dn_soll_grad wiederum einen Sollschlupf-Gradienten darstellt, welcher von dem Gradienten der Turbinendrehzahl n_Turb_grad abhängig ist.

Des weiteren wird in dem Verarbeitungsmodul S4' zur Sollschlupf-Erhöhung in einer Unterscheidungsfunktion S9' geprüft, ob ein Abbruchkriterium erfüllt ist. So wird das Verarbeitungsmodul S4' zur Sollschlupf-Erhöhung abgebrochen, wenn ein Befehl "Aktivieren der Wandlerkupplung" oder ein Befehl "Sollschlupf-Reduktion" erkannt wird.

Sobald in der Unterscheidungsfunktion S9' des Verarbeitungsmodules S4' eines dieser Abbruchkriterien erkannt wird, wird eine Verarbeitungsfunktion S10' zur Rückkehr in das Hauptprogramm gestartet, andernfalls wird eine Unterscheidungsfunktion S11' zur Prüfung, ob eine Endebedingung erfüllt ist, aktiviert.

Das Verarbeitungsmodul S4' wird in der in Rede stehenden Ausführungsvariante beendet, wenn in der Unterscheidungsfunktion S11' erkannt wirt, daß der Wandlerkupplungsdruck p_WK kleiner oder gleich dem Schwell-Druck p_WK_schwell ist oder die vorgegebene Dauer der Sollschlupf-Erhöhung T_E abgelaufen ist.

Wenn keine der zuvor genannten Endebedingungen erfüllt ist, wird im Verarbeitungsmodul S4' zur Sollschlupf-Erhöhung in die Zeitschleife S7' zurückverzweigt.

Wird dagegen eine der Endebedingungen als erfüllt erkannt, wird das Verarbeitungsmodul S4' zur Sollschlupf-Erhöhung beendet und von dort in das Unterprogramm zur Deaktivierung der Wandlerkupplung gemäß Fig. 2 verzweigt, indem eine Verarbeitungsfunktion S5' zur Rückkehr in das Hauptprogramm gestartet wird.

Ebenso wird die Verarbeitungsfunktion S5' zur Rückkehr in das Hauptprogramm aktiviert, wenn in der Unterscheidungsfunktion S3' des Unterprogramms zur Deaktivierung der Wandlerkupplung gemäß Fig. 2 festgestellt wird, daß die gewählte druckproportionale Größe kleiner oder gleich dem jeweils vorgegebenen Grenzwert GW2 ist.

Bezugszeichen

| Dki | Drosselklappenwinkel |
|---|---|
| dn_ist | Ist-Schlupf |
| dn_schwell | Schwellschlupf |
| dn_soll | Soll-Schlupf |
| dn_soll basis | Basis-Sollschlupf |
| dn_soll_diff | Schlupfdifferenz |
| dn_soll_grad | Sollschlupf-Gradient |
| dn_soll_ziel | Ziel-Sollschlupf |
| dn_start | Start-Sollschlupf |
| GW1 | Grenzwert |
| GW2 | Grenzwert |
| n_Mot | Motor-Drehzahl |
| n_Turb_grad | Gradient der Turbinendrehzahl |
| P | Progressionsfaktor |
| p_WK | Wandlerkupplungsdruck |
| p_WK_schwell | Schwell-Druck |
| S1, S1' | Unterscheidungsfunktion |
| S2, S2' | Warteschleife |
| S3; S3' | Unterscheidungsfunktion |
| S4, S4' | Verarbeitungsmodul |
| S5, S5' | Verarbeitungsfunktion |
| S6, S6' | Verarbeitungsfunktion |
| S7, S7' | Verarbeitungsfunktion |
| S8, S8' | Verarbeitungsfunktion |
| S9, S9' | Unterscheidungsfunktion |
| S10, S10' | Verarbeitungsfunktion |
| S11, S11' | Unterscheidungsfunktion |
| t | aktueller Zeitwert |
| t_0 | Startzeit |
| t_E | Erhöhungszeit |
| t_R | Reduktionszeit |
| t_E | (Zeitschleife) der Erhöhungszeit |
| t_R | (Zeitschleife) der Reduktionszeit |

| T_E | Dauer der Sollschlupf-Erhöhung |
| T_Mot | Motor-Drehmoment |
| T_Mot_schwell | Motor-Schwell-Drehmoment |
| T_WK_schwell | Kupplungs-Schwell-Drehmoment |
| T_R | Dauer der Sollschlupf-Reduktion |
| T_WK | Kupplungsdrehmoment |
| WK | Wandlerkupplung |

**Patentansprüche**

1. Verfahren zur Steuerung eines Schaltvorganges zwischen einem aktivierten und einem deaktivierten Zustand einer Wandlerkupplung, mit einer geregelten Wandlerüberbrückungskupplung, mit einem Sollschlupf, wobei die Wandlerkupplung eine Regelstrecke darstellt, welche in einem Regelkreis, der eine Führungsgröße und eine Regelgröße aufweist, einem Regler nachgeschaltet ist, dadurch **gekennzeichnet**, daß in einer ersten Unterscheidungsfunktion (S1,S1') geprüft wird, ob ein Schaltbefehl zur Aktivierung oder Deaktivierung der Wandlerkupplung (WK) vorliegt, und

   1.1 wenn ein Befehl zur Aktivierung der Wandlerkupplung (WK) erkannt wird, eine weitere Unterscheidungsfunktion (S3) gestartet wird, zur Prüfung, ob ein vorhandener Ist-Schlupf (dn_ist) kleiner oder gleich einem ersten Grenzwert (GW1) ist, und
   1.1.1 bei negativem Abfrageergebnis ein Verarbeitungsmodul (S4) zur Sollschlupf-Reduktion auf einen vorgegebenen Sollschlupf (dn_soll) gestartet wird, bevor in einer weiteren Verarbeitungsfunktion (S5) in ein Hauptprogramm verzweigt wird,
   1.1.2 bei positivem Abfrageergebnis zu der Verarbeitungsfunktion (S5) zur Rückkehr in das Hauptprogramm verzweigt wird,
   1.2 wenn ein Befehl zur Deaktivierung der Wandlerkupplung erkannt wird, eine weitere Unterscheidungsfunktion (S3') gestartet wird, zur Prüfung, ob eine druckproportionale Größe kleiner oder gleich einem jeweils vorgegebenen Grenzwert (GW2) ist, und
   1.2.1 bei negativem Abfrageergebnis ein Verarbeitungsmodul (S4') zur Sollschlupf-Erhöhung gestartet wird, bevor die Verarbeitungsfunktion (S5') zur Rückkehr in das Hauptprogramm gestartet wird,
   1.2.2 bei positivem Abfrageergebnis zu der Verarbeitungsfunktion (S5') zur Rückkehr in das Hauptprogramm verzweigt wird.

2. Verfahren nach Anspruch 1, dadurch **gekennzeichnet**, daß der erste Grenzwert (GW1) gleich der Summe aus einem vorgegebenen Ziel-Sollschlupf (dn_soll_ziel) und einem Schwellschlupf (dn_schwell) ist.

3. Verfahren nach Anspruch 2, dadurch **gekennzeichnet**, daß der Schwellschlupf (dn_schwell) konstant ist.

4. Verfahren nach Anspruch 2, dadurch **gekennzeichnet**, daß der Schwellschlupf (dn_schwell) eine Funktion eines Motor-Drehmomentes (T_Mot) und einer Motor-Drehzahl (n_Mot) darstellt.

5. Verfahren nach Anspruch 1, dadurch **gekennzeichnet**, daß in dem Verarbeitungsmodul (S4) zur Sollschlupf-Reduktion folgende Verfahrensschritte abgearbeitet werden:

   a) in einer ersten Verarbeitungsfunktion (S6) wird zu einer Startzeit (t_0) ein aktueller Schlupfwert (dn_start) eingelesen,
   b) in einer nachfolgenden Verarbeitungsfunktion (S7) wird eine Zeitschleife gemäß der Funktion (t_R = t - t_0) mit (t_R) für Reduktionszeit, (t) für aktuelle Zeit und (t_0) für Startzeit gestartet,
   c) in einer weiteren Verarbeitungsfunktion (S8) wird der Sollschlupf (dn_soll) gemäß einer Übergangsfunktion (dn_soll = f(t_R)) ermittelt,
   d) in einer Unterscheidungsfunktion (S9) wird geprüft, ob ein Abbruchkriterium erfüllt ist,
   e) falls in der Unterscheidungsfunktion (S9) erkannt wird, daß ein Abbruchriterium erfüllt, wird in eine Verarbeitungsfunktion (S10) zur Rückkehr in das Hauptprogramm verzweigt, andernfalls wird in eine Unterscheidungsfunktion (S11) zur Prüfung, ob ein Endebedingung erfüllt ist, verzweigt,
   f) wenn in der Unterscheidungsfunktion (S11) erkannt wird, daß eine Endebedingung erfüllt ist, wird das Verarbeitungsmodul zur Sollschlupf-Reduktion beendet, anderenfalls wird in die Zeitschleife (57) zurückverzweigt.

6. Verfahren nach einem der Ansprüche 1 bis 5, dadurch **gekennzeichnet**, daß in dem Verarbeitungsmodul (S4) zur Sollschlupf-Reduktion der Sollschlupf (dn_soll) gemäß der Übergangsfunktion

$$\{dn\_soll(t\_R) = dn\_start - [dn\_start - dn\_soll\_ziel] *$$

$$(t\_R/T\_R) \, EXP \, (1/P) + dn\_soll\_basis\}$$

ermittelt wird, mit (t_R) für Reduktionszeit, (T_R) für vorgegebene Dauer der Sollschlupf-Reduktion, (dn_start) für Start-Schlupf, (dn_soll_ziel) für vorgegebener Ziel-Sollschlupf, (dn_soll_basis) für vorgegebener Basis-Sollschlupf und P für einen Progressionsfaktor.

7. Verfahren nach einem der Ansprüche 1 bis 5, dadurch **gekennzeichnet**, daß in dem Verarbeitungsmodul (S4) zur Sollschlupf-Reduktion der Sollschlupf (dn_soll) gemäß der Übergangs funktion

$$\{dn\_soll(t\_R) = dn\_start - [dn\_start\_dn\_soll\_ziel] *$$

$$\sin((\pi/2)* (t\_R/T\_R)\ EXP\ P) + dn\_soll\_basis\}$$

errechnet wird, mit (t_R) für Reduktionszeit, (T_R) für vorgegebene Dauer der Sollschlupf-Reduktion, (dn_start) für Start-Schlupf, (dn_soll_ziel) für vorgegebener Ziel-Sollschlupf, (dn_soll_basis) für vorgegebener Basis-Sollschlupf und (P) für einen Progressionsfaktor.

8. Verfahren nach Anspruch 6 oder 7, dadurch **gekennzeichnet**, daß die Dauer der Sollschlupf-reduktion (T_R) in Abhängigkeit von einer zu überbrückenden Schlupfdrehzahl (dn_soll_diff) und eines Gradienten der Turbinendrehzahl (n_Turb_grad) ermittelt wird, wobei die zu überbrückende Schlupfdrehzahl (dn_soll_diff) eine Differenz des Soll-Zielschlupfes (dn_soll_ziel) minus des StartSchlupfes (dn_start) darstellt.

9. Verfahren nach einem der Ansprüche 1 bis 5, dadurch **gekennzeichnet**, daß in dem Verarbeitungsmodul (S4) zur Sollschlupf-Reduktion der Sollschlupf (dn_soll) gemäß der Funktion [dn_soll(t_R) = dn_start - dn_soll_grad * t_R + dn_soll_basis] errechnet wird, mit (t_R) für Reduktionszeit, (dn_start) für Start-Sollschlupf, (dn_soll_grad) für Sollschlupf-Gradient und (dn_soll_basis) als vorgegebener Basis-Sollschlupf.

10. Verfahren nach einem der Ansprüche 1 bis 9, dadurch **gekennzeichnet**, daß das Verarbeitungsmodul (S4) zur Sollschlupf-Reduktion abgebrochen wird, wenn ein Befehl "Deaktivieren der Wandlerkupplung" oder ein Schubbetrieb oder ein Befehl "Sollschlupf-Erhöhung" erkannt wird.

11. Verfahren nach einem der Ansprüche 1 bis 10, dadurch **gekennzeichnet**, daß das Verarbeitungsmodul (S4) zur Sollschlupf-Reduktion beendet wird, wenn erkannt wird, daß der Sollschlupf (dn_soll) kleiner oder gleich einer Summe aus Ziel-Sollschlupf (dn_soll_ziel) und Schwell-Sollschlupf (dn_soll_schwell) ist.

12. Verfahren nach Anspruch 1, dadurch **gekennzeichnet**, daß die druckproportionale Größe einen vorhandenen Wandlerkupplungsdruck (p_WK) oder ein vorhandenes Kupplungsdrehmoment (T_WK) oder ein vorhandenes Motor-drehmoment (T_Mot) darstellt.

13. Verfahren nach Anspruch 12, dadurch **gekennzeichnet**, daß der Wandlerkupplungsdruck (p_WK) über Mittelwertbildung berechnet wird.

14. Verfahren nach Anspruch 1, dadurch **gekennzeichnet**, daß der Grenzwert (GW2) für den Wandlerkupplungsdruck (p_WK) ein vorgegebener Schwell-Druck (p_WK_schwell), für das Kupplungsdrehmoment (T_WK) ein vorgegebenes Kupplungs-Schwell-Drehmoment (T_WK_schwell) und für das Motordrehmoment (T_Mot) ein vorgegebenes Motor-Schwell-Drehmoment (T_Mot_schwell) ist.

15. Verfahren nach Anspruch 14, dadurch **gekennzeichnet**, daß der Schwell-Druck (p_WK_chwell) konstant ist.

16. Verfahren nach Anspruch 14, dadurch **gekennzeichnet**, daß der Schwell-Druck (p_WK_schwell) eine Funktion der Motordrehzahl (n_Mot) darstellt.

17. Verfahren nach Anspruch 1, , dadurch **gekennzeichnet**, daß in dem Verarbeitungsmodul (S4') zur Sollschlupf-Erhöhung folgende Verfahrensschritte abgearbeitet werden:

a) in einer ersten Verarbeitungsfunktion (S6') wird zu einer Startzeit (t_0) ein aktueller Soll-Schlupf (dn_soll (t)) eingelesen,
b) in einer nachfolgenden Verarbeitungsfunktion (S7') wird eine Zeitschleife gemäß der Funktion ($\Delta$ t_E = t - t_0) mit (t_E) für Erhöhungszeit, (t) für aktuelle Zeit und (t_0) für Startzeit gestartet,
c) in einer weiteren Verarbeitungsfunktion (S8') wird der Sollschlupf (dn_soll) gemäß einer Übergangsfunktion (dn_soll = f(t_E)) ermittelt,
d) in einer Unterscheidungsfunktion (S9') wird geprüft, ob ein Abbruchkriterium erfüllt ist,
e) falls in der Unterscheidungsfunktion (S9') erkannt wird, daß ein Abbruchkriterium erfüllt, wird in eine Verarbeitungsfunktion (S10') zur Rückkehr in das Hauptprogramm verzweigt, andernfalls wird in eine Unterscheidungsfunktion (S11') zur Prüfung, ob ein Endebedingung erfüllt ist, verzweigt,
f) wenn in der Unterscheidungsfunktion (S11') erkannt wird, daß eine Endebedingung erfüllt ist, wird das Verarbeitungsmodul zur Sollschlupf-Erhöhung beendet, anderenfalls wird in die Zeitschleife (S7') zurückverzweigt.

18. Verfahren nach einem der Ansprüche 1 oder 17, dadurch **gekennzeichnet**, daß in dem Verarbeitungsmodul (S4') zur Sollschlupf-Erhöhung der Sollschlupf (dn_soll) gemäß der Übergangsfunktion

$$\{dn\_soll(t\_E) = dn\_start + [dn\_soll\_ziel - dn\_start] *$$

$$(t\_E/T\_E)\ EXP\ (1/P) + dn\_soll\_basis\}$$

errechnet wird, mit (t_E) für Erhöhungszeit, (T_E) für vorgegebene Dauer der Sollschlupf-Erhöhung, (dn_start) für Start-Sollschlupf, (dn_soll_ziel) für vorgegebener Ziel-Sollschlupf, (dn_soll_basis) für vorgegebener Basis-Sollschlupf und (P) für einen Progressionsfaktor.

19. Verfahren nach Anspruch 1 oder 17, dadurch **gekennzeichnet**, daß in dem Verarbeitungsmodul (S4') zur Sollschlupf-Erhöhung der Sollschlupf (dn_soll) gemäß der Übergangsfunktion

$$\{dn\_soll(t\_E) = dn\_start + [dn\_soll\_ziel - dn\_start\ ] *$$

$$sin((\pi/2)*(t\_E/T\_E)\ EXP\ (P) + dn\_soll\_basis\}$$

errechnet wird, mit (t_E) für Erhöhungszeit, (T_E) für vorgegebene Dauer der Sollschlupf-Erhöhung, (dn_start) für Start-Sollschlupf, (dn_soll_ziel) für vorgegebener Ziel-Sollschlupf, (dn_soll_basis) für vorgegebener Basis-Sollschlupf und (P) für einen Progressionsfaktor.

20. Verfahren nach Anspruch 18 oder 19, dadurch **gekennzeichnet**, daß die Dauer der Sollschlupferhöhung (T_E) in Abhängigkeit von einer zu überbrückenden Schlupfdrehzahl (dn_soll_diff) und eines Gradienten der Turbinendrehzahl (n_Turb_grad) ermittelt wird, wobei die zu überbrückende Schlupfdrehzahl (dn_soll_diff) eine Differenz zwischen dem Soll-Zielschlupfes dn_soll_ziel und dem Startschlupfes dn_start darstellt.

21. Verfahren nach Anspruch 1 oder 17, dadurch **gekennzeichnet**, daß in dem Verarbeitungsmodul (S4') zur Sollschlupf-Erhöhung der Sollschlupf (dn_soll) gemäß der Übergangsfunktion

$$[dn\_soll(t\_E) = dn\_start + dn\_soll\_grad * t\_E +$$

$$dn\_soll\_basis]$$

errechnet wird, mit (t_E) für Erhöhungszeit, (dn_start) für Start-Sollschlupf, (dn_soll_grad) für Sollschlupf-Gradient und (dn_soll_basis) für vorgegebener Basis-Sollschlupf.

22. Verfahren nach Anspruch 1 oder einem der Ansprüche 17 bis 21, dadurch **gekennzeichnet**, daß das Verarbeitungsmodul (S4') zur Sollschlupf-Erhöhung abgebrochen wird, wenn ein Befehl "Aktivieren der Wandlerkupplung" oder ein Befehl "Sollschlupf-Reduktion" erkannt wird.

23. Verfahren nach Anspruch 18 oder 21, dadurch **gekennzeichnet**, daß das Verarbeitungsmodul (S4') zur Sollschlupf-Erhöhung beendet wird, wenn erkannt wird, daß der Wandlerkupplungsdruck (p_WK) kleiner oder gleich dem Schwell-Druck (p_WK_schwell) ist.

24. Verfahren nach Anspruch 19, dadurch **gekennzeichnet**, daß das Verarbeitungsmodul (S4') zur Sollschlupf-Erhöhung beendet wird, wenn erkannt wird, daß die vorgegebene Dauer der Sollschlupf-Erhöhung (T_E) abgelaufen ist.

25. Verfahren nach Anspruch 9 oder 21, dadurch **gekennzeichnet**, daß der Sollschlupf_Gradient (dn_soll_grad) eine Funktion eines Gradienten der Turbinendrehzahl (n_Turb_grad) darstellt.

26. Verfahren nach einem der Ansprüche 2 bis 25, dadurch **gekennzeichnet**, daß der Ziel-Sollschlupf (dn_soll_ziel) aus einem Kennfeld ermittelt wird.

27. Verfahren nach einem der Ansprüche 1 bis 26, dadurch **gekennzeichnet**, daß bei einem negativen Abfrageergebnis der ersten Unterscheidungsfunktion (S1, S1') eine Warteschleife (S2, S2') gestartet wird.

**Claims**

1. Method for the open-loop control of a switching operation between an activated and a deactivated state of a converter clutch, having a closed-loop-controlled lock-up clutch, having a required slip, the lock-up clutch representing a closed-loop control system which is connected downstream of a control-loop unit in a closed-control loop which has a reference variable and a control variable, characterized in that a first decision function (S1, S1') tests whether a switching instruction to activate or deactivate the lock-up clutch (WK) is present, and

    1.1 if a command for the activation of the lock-up clutch (WK) is recognized, a further decision function (S3) is started to test whether an existing actual slip (dn_ist) is less than or equal to a first limit value (GW1) and
    1.1.1 given a negative interrogation result, a processing module (S4) for required slip reduction to a specified required slip (dn_soll) is started before branching is performed into a main program in a further processing function (S5),
    1.1.2 given a positive interrogation result, branching is performed to the processing function (S5) for the purpose of returning to the main program,

1.2 if an instruction for the deactivation of the lock-up clutch is detected, a further decision function (S3') is started to test whether a pressure-proportional variable is less than or equal to a respective specified limit value (GW2), and

1.2.1 given a negative interrogation result, a processing module (S4') for required slip increase is started before the processing function (S5') for the return to the main program is started,

1.2.2 given a positive interrogation result, branching is performed to the processing function (S5') for the purpose of returning to the main program.

2. Method according to Claim 1, characterized in that the first limit value (GW1) is equal to the sum of a specified target required slip (dn_soll_ziel) and a threshold slip (dn_schwell).

3. Method according to Claim 2, characterized in that the threshold slip (dn_schwell) is constant.

4. Method according to Claim 2, characterized in that the threshold slip (dn_schwell) is a function of an engine torque (T_Mot) and an engine rotational speed (n_Mot).

5. Method according to Claim 1, characterized in that the following method steps are processed in the processing module (S4) for nominal slip reduction:

a) in a first processing function (S6), an actual slip value (dn_start) is read in at a starting time (t_0),

b) in a subsequent processing function (S7), a time loop is started in accordance with the function (t_R = t - t_0), with (t_R) for reduction time, (t) for actual time and (t_0) for start time,

c) in a further processing function (S8), the nominal slip (dn_soll) is determined in accordance with a transition function (dn_soll = f (t_R)),

d) in a decision function (S9), a test is performed to determine whether a termination criterion is fulfilled,

e) if it is recognized in the decision function (S9) that a termination criterion is fulfilled, branching is performed into a processing function (S10) for the return to the main program, otherwise branching is performed into a decision function (S11) to test whether an end condition is fulfilled,

f) if it is recognized in the decision function (S11) that an end condition is fulfilled, the processing module for nominal slip reduction is terminated, otherwise branching is performed back into the time loop (S7).

6. Method according to one of Claims 1 to 5, characterized in that, in the processing module (S4) for nominal slip reduction, the nominal slip (dn_soll) is determined in accordance with the transition function

$$\{dn\_soll(t\_R) = dn\_start - [dn\_start - dn\_soll\_ziel] *$$

$$(t\_R/T\_R) \, EXP \, (1/P) + dn\_soll\_basis\},$$

with (t_R) for the reduction time, (T_R) for the specified duration of the nominal slip reduction, (dn_start) for starting slip, (dn_soll_ziel) for specified target nominal slip, (dn_soll_basis) for specified basic nominal slip and P for a progression factor.

7. Method according to one of Claims 1 to 5, characterized in that, in the processing module (S4) for nominal slip reduction, the nominal slip (dn_soll) is calculated in accordance with the transition function

$$\{dn\_soll(t\_R) = dn\_start - [dn\_start - dn\_soll\_ziel] *$$

$$\sin((\pi/2)* (t\_R/T\_R) \, EXP \, P) + dn\_soll\_basis\},$$

with (t_R) for reduction time, (T_R) for specified duration of the nominal slip reduction, (dn_start) for starting slip, (dn_soll_ziel) for specified target nominal slip, (dn_soll_basis) for specified basic nominal slip and (P) for a progression factor.

8. Method according to Claim 6 or 7, characterized in that the duration of the nominal slip reduction (T_R) is determined as a function of a slip rotational speed (dn_soll_diff) to be locked up and of a gradient of the turbine rotational speed (n_Turb_grad), the slip rotational speed (dn_soll_diff) to be locked up being the difference of the nominal target slip (dn_soll_ziel) minus the starting slip (dn_start).

9. Method according to one of Claims 1 to 5, characterized in that, in the processing module (S4) for nominal slip reduction, the nominal slip (dn_soll) is calculated in accordance with the function

$$[dn\_soll(t\_R) = dn\_start - dn\_soll\_grad * t\_R +$$

$$dn\_soll\_basis],$$

with (t_R) for reduction time, (dn_start) for starting nominal slip, (dn_soll_grad) for nominal slip gradient and (dn_soll_basis) as specified basic nominal slip.

10. Method according to one of Claims 1 to 9, characterized in that the processing module (S4) for the nominal slip reduction is terminated if a "deactivation of the lock-up clutch" command or a coasting command or a "nominal slip increase" command is recognized.

11. Method according to one of Claims 1 to 10, characterized in that the processing module (S4) for nominal slip reduction is terminated if it is recognized that the nominal slip (dn_soll) is less than or equal to a sum of target nominal slip (dn_soll_ziel) and threshold nominal slip (dn_soll_schwell).

12. Method according to Claim 1, characterized in that the pressure-proportional variable is an existing lock-up clutch pressure (p_WK) or an existing clutch torque (T_WK) or an existing engine torque (T_Mot).

13. Method according to Claim 12, characterized in that the lock-up clutch pressure (p_WK) is calculated by taking a mean.

14. Method according to Claim 1, characterized in that the limit value (GW2) is a specified threshold pressure (p_WK_schwell) for the lock-up clutch pressure (p_WK), a specified clutch threshold torque (T_WK_schwell) for the clutch torque (T_WK) and a specified engine threshold torque (T_Mot_schwell) for the engine torque (T_Mot).

15. Method according to Claim 14, characterized in that the threshold pressure (p_WK_schwell) is constant.

16. Method according to Claim 14, characterized in that the threshold pressure (p_WK_schwell) is a function of the engine rotational speed (n_Mot).

17. Method according to Claim 1, characterized in that the following method steps are processed in the processing module (S4') for nominal slip increase:

a) in a first processing function (S6'), an actual nominal slip (dn_soll(t)) is read in at a starting time (t_0),
b) in a subsequent processing function (S7'), a time loop is started in accordance with the function ($\Delta$t_E = t - t_0), with (t_E) for increase time, (t) for actual time and (t_0) for starting time,
c) in a further processing function (S8'), the nominal slip (dn_soll) is determined in accordance with a transmission function (dn_soll = f (t_E)),

d) in a decision function (S9'), a test is performed to determine whether a termination criterion is fulfilled,
e) if the decision function (S9') recognizes that a termination criterion is fulfilled, branching is performed into a processing function (S10') for the return to the main program, otherwise branching is performed into a decision function (S11') for testing whether an end condition is fulfilled,
f) if the decision function (S11') recognizes that an end condition is fulfilled, the processing module for nominal slip increase is terminated, otherwise branching is performed back into the time loop (S7').

18. Method according to one of Claims 1 or 17, characterized in that, in the processing module (S4') for the nominal slip increase, the nominal slip (dn_soll) is calculated in accordance with the transition function

$$\{dn\_soll(t\_E) = dn\_start + [dn\_soll\_ziel - dn\_start] *$$

$$(t\_E/T\_E) \ EXP \ (1/P) + dn\_soll\_basis\},$$

with (t_E) for increase time, (T_E) for specified duration of the nominal slip increase, (dn_start) for the starting nominal slip, (dn_soll_ziel) for specified target nominal slip, (dn_soll_basis) for specified basic nominal slip and (P) for a progression factor.

19. Method according to Claim 1 or 17, characterized in that, in the processing module (S4') for the nominal slip increase, the nominal slip (dn_soll) is calculated in accordance with the transition function

$$\{dn\_soll(t\_E) = dn\_start + [dn\_soll\_ziel - dn\_start] *$$

$$sin((\pi/2) * (t\_E/T\_E) \ EXP \ P) + dn\_soll\_basis\},$$

with (t_E) for increase time, (T_E) for specified duration of the nominal slip increase, (dn_start) for starting nominal slip, (dn_soll_ziel) for specified target nominal slip, (dn_soll_basis) for specified basic nominal slip and (P) for a progression factor.

20. Method according to Claim 18 or 19, characterized in that the duration of the nominal slip increase (T_E) is determined as a function of a slip rotational speed (dn_soll_diff) to be locked up and a gradient of the turbine rotational speed (n_Turb_grad), the slip rotational speed (dn_soll_diff) to be locked up being the difference between the nominal target slip (dn_soll_ziel) and the starting slip (dn_start).

**21.** Method according to Claim 1 or 17, characterized in that, in the processing module (S4') for the nominal slip increase, the nominal slip (dn_soll) is calculated in accordance with the transition function

$$[dn\_soll(t\_E) = dn\_start + dn\_soll\_grad * t\_E +$$

$$dn\_soll\_basis],$$

with (t_E) for increase time, (dn_start) for starting nominal slip, (dn_soll_grad) for nominal slip gradient and (dn_soll_basis) for specified basic nominal slip.

**22.** Method according to Claim 1 or one of Claims 17 to 21, characterized in that the processing module (S4') for the nominal slip increase is terminated if an "activate the lock-up clutch" instruction or a "nominal slip reduction" instruction is recognized.

**23.** Method according to Claim 18 or 21, characterized in that the processing module (S4') for the nominal slip increase is terminated if it is recognized that the lock-up clutch pressure (p_WK) is less than or equal to the threshold pressure (p_WK_schwell).

**24.** Method according to Claim 19, characterized in that the processing module (S4') for the nominal slip increase is terminated if it is recognized that the specified duration of the nominal slip increase (T_E) has elapsed.

**25.** Method according to Claim 9 or 21, characterized in that the nominal slip gradient (dn_soll_grad) is a function of a gradient of the turbine rotational speed (n_Turb_grad).

**26.** Method according to one of Claims 2 to 25, characterized in that the target nominal slip (dn_soll_ziel) is determined from a family of characteristics.

**27.** Method according to one of Claims 1 to 26, characterized in that a waiting loop (S2, S2') is started in the event of a negative interrogation result of the first decision function (S1, S1').

**Revendications**

**1.** Procédé pour le réglage d'un processus de changement de vitesse entre un état activé et un état désactivé d'un convertisseur semi-automatique, avec un convertisseur d'embrayage de prise directe réglé, avec un glissement de consigne, dans lequel le convertisseur semi-automatique représente un système réglé qui, dans un circuit de réglage comportant une grandeur de référence et une grandeur de réglage, est monté en aval d'un régulateur, **caractérisé en ce que**, dans une première fonction de discrimination (S1, S1'), il est vérifié si une commande de manoeuvre pour activer ou désactiver le convertisseur semi-automatique (WK) est présente, et

1.1. si une commande pour l'activation du convertisseur semi-automatique (WK) est détectée, une autre fonction de discrimination (S3) est lancée pour vérifier si un glissement réel (dn_ist) présent est inférieur ou égal à une première valeur limite (GW1), et
1.1.1. en cas de résultat négatif de l'interrogation, un module de traitement (S4) est lancé pour la réduction du glissement de consigne à un glissement de consigne prédéfini (dn_soll) avant que, dans une autre fonction de traitement (S5), ait lieu l'embranchement dans un programme principal, 1.1.2. en cas de résultat positif de l'interrogation, un embranchement pour le retour dans le programme principal dans la fonction de traitement (S5) est effectué,
1.2. si une commande pour la désactivation du convertisseur semi-automatique est détectée, une autre fonction de discrimination (S3') est lancée pour tester si une grandeur proportionnelle à la pression est inférieure ou égale à une valeur limite prédéfinie (GW2), et
1.2.1. en cas de résultat négatif de l'interrogation, un module de traitement (S4') pour l'augmentation du glissement de consigne est lancé avant que la fonction de traitement (S5') pour le retour dans le programme principal soit lancée
1.2.2. en cas de résultat positif de l'interrogation, un embranchement pour le retour dans le programme principal dans la fonction de traitement (S5') est effectué.

**2.** Procédé selon la revendication 1, **caractérisé en ce que** la première valeur limite (GW1) est égale à la somme formée par un glissement de consigne recherché prédéterminé (dn_soll_ziel) et un glissement de seuil (dn_schwell).

**3.** Procédé selon la revendication 2, **caractérisé en ce que** le glissement de seuil (dn_schwell) est constant.

**4.** Procédé selon la revendication 2, **caractérisé en ce que** le glissement de seuil (dn_schwell) est une fonction d'un couple moteur (T_Mot) et d'une vitesse du moteur (n_Mot).

**5.** Procédé selon la revendication 1, **caractérisé en ce que**, dans le module de traitement (S4), les étapes de procédé suivantes sont effectuées pour la réduction du glissement de consigne :

a) dans une première fonction de traitement (S6), une valeur de glissement réelle (dn-start) pour un temps de démarrage (t_0) est entrée,
b) dans une fonction de traitement suivante (S7), une boucle de temps selon la fonction (t_R = t - t_0), avec (t_R) pour le temps de réduction, (t) pour le temps réel et (t_0) pour le temps du démarrage est démarrée,
c) dans une autre fonction de traitement (S8), le glissement de consigne (dn_soll) est déterminé selon une fonction de transition (dn_soll = f(t_R)),
d) dans une fonction de discrimination (S9), il est testé si un critère de rupture est satisfait,
e) si, dans la fonction de discrimination (S9), il est détecté qu'un critère de rupture est satisfait, un embranchement dans une fonction de traitement (S10) a lieu pour le retour dans le programme principal, dans le cas contraire, un embranchement dans une fonction de discrimination (S11) a lieu pour vérifier si une condition de fin est satisfaite,
f) si, dans la fonction de discrimination (S11), il est détecté qu'une condition de fin est satisfaite, le module de traitement pour la réduction du glissement de consigne est terminé, dans le cas contraire, un réembranchement dans la boucle de temps (S7) est effectué.

6. Procédé selon l'une des revendications 1 à 5, **caractérisé en ce que** dans le module de traitement (S4) pour la réduction du glissement de consigne, le glissement de consigne (dn_soll) est déterminé selon la fonction de transition

{dn_soll(t_R) = dn_start - [dn_start - dn_soll_ziel] * (t_R/T_R) EXP (1/P) + dn_soll_basis}

avec (t_R) pour le temps de réduction, (T_R) pour la durée prédéterminée de la réduction du glissement de consigne, (dn_start) pour le glissement au démarrage, (dn_soll_ziel) pour le glissement de consigne recherché prédéterminé, (dn_soll_basis) pour le glissement de consigne de base prédéterminé et P pour un facteur de progression.

7. Procédé selon l'une des revendications 1 à 5, **caractérisé en ce que**, dans le module de traitement (S4) pour la réduction du glissement de consigne, le glissement de consigne (dn_soll) est calculé selon la fonction de transition

{dn_soll(t_R) = dn_start - [dn_start - dn_soll_ziel] *

sin ((π/2) * (t_R/T_R) EXP P) + dn_soll_basis}

avec (t_R) pour le temps de réduction, (T_R) pour la durée prédéterminée de la réduction du glissement de consigne, (dn_start) pour le glissement au démarrage, (dn_soll_ziel) pour le glissement de consigne recherché prédéterminé, (dn_soll_basis) pour le glissement de consigne de base prédéterminé et (P) pour un facteur de progression.

8. Procédé selon la revendication 6 ou 7, **caractérisé en ce que** la durée de la réduction du glissement de consigne (T_R) est déterminée en fonction d'une vitesse de rotation de glissement (dn_soll_diff) à dériver (dn_soll_diff) et d'un gradient de la vitesse de rotation de la turbine (n_Turb_grad), la vitesse de glissement à dériver (dn-soll_diff) représentant une différence du glissement de consigne recherché (dn_soll-ziel) moins le glissement au démarrage (dn_start).

9. Procédé selon l'une des revendications 1 à 5, **caractérisé en ce que**, pour la réduction du glissement de consigne, est calculé, dans le module de traitement (S4), le glissement de consigne (dn_soll) selon la fonction [dn_soll(t_R) = dn_start - dn_soll_grad * t_R + dn_soll_basis], avec (t_R) pour le temps de réduction, (dn_start) pour le glissement de consigne de démarrage, (dn_soll_grad) pour le gradient du glissement de consigne et (dn_soll_basis) pour le glissement de consigne de base prédéterminé.

10. Procédé selon l'une des revendications 1 à 9, **caractérisé en ce que** le module de traitement (S4) pour la réduction du glissement de consigne est interrompu lorsqu'une commande "désactiver le convertisseur semi-automatique" ou un fonctionnement de poussée ou une commande "augmentation du glissement de consigne" est détecté.

11. Procédé selon l'une des revendications 1 à 10, **caractérisé en ce que** le module de traitement (S4) pour la réduction du glissement de consigne est terminé lorsqu'il est détecté que le glissement de consigne (dn_soll) est inférieur ou égal à une somme formée par le glissement de consigne recherché (dn_soll_ziel) et le glissement de consigne de seuil (dn_soll_schwell).

12. Procédé selon la revendication 1, **caractérisé en ce que** la grandeur proportionnelle de pression représente une pression existante du convertisseur semi-automatique (p_WK) ou un couple de rotation du convertisseur (T_WK) présent ou un couple moteur (T_Mot) présent.

**13.** Procédé selon la revendication 12, **caractérisé en ce que** la pression du convertisseur semi-automatique (p_WK) est calculée par la méthode du calcul de la valeur moyenne.

**14.** Procédé selon la revendication 1, **caractérisé en ce que** la valeur limite (GW2) pour la pression du convertisseur semi-automatique (p_WK) est une pression de seuil (p_WK_schwell) prédéterminée, pour le couple de rotation du convertisseur (T_WK), un couple de rotation de seuil (T_WK_schwell) prédéterminé et pour le couple moteur (T_Mot), un couple moteur de seuil (T_Mot_schwell) prédéterminé.

**15.** Procédé selon la revendication 14, **caractérisé en ce que** la pression de seuil (p_WK_schwell) est constante.

**16.** Procédé selon la revendication 14, **caractérisé en ce que** la pression de seuil (p_WK_schwell) représente une fonction de la vitesse de rotation du moteur (n_Mot).

**17.** Procédé selon la revendication 1, **caractérisé en ce que**, dans le module de traitement (S4'), les étapes de procédé suivantes sont effectuées pour l'augmentation du glissement de consigne :

a) dans une première fonction de traitement (S6'), une valeur du glissement de consigne réelle (dn_soll_(t)) pour un temps de démarrage (t_0), est entrée,

b) dans une fonction de traitement suivante (S7'), une boucle de temps selon la fonction ($\Delta$ t_E = t - t_0), avec (t_E) pour le temps d'augmentation, (t) pour le temps réel et (t_0) pour le temps de démarrage est démarrée,

c) dans une autre fonction de traitement (S8'), le glissement de consigne (dn_soll) est déterminé selon une fonction de transition (dn_soll = f(t_E)),

d) dans une fonction de discrimination (S9'), il est testé si un critère de rupture est satisfait,

e) si, dans la fonction de discrimination (S9'), il est détecté qu'un critère de rupture est satisfait, un embranchement dans une fonction de traitement (S10') a lieu pour le retour dans le programme principal, dans le cas contraire, un embranchement dans une fonction de discrimination (S11') a lieu pour vérifier si une condition de fin est satisfaite,

f) si, dans la fonction de discrimination (S11'), il est détecté qu'une condition de fin est satisfaite, le module de traitement pour l'augmentation du glissement de consigne est terminé, dans le cas contraire, un réembranchement dans la boucle de temps (S7') est effectué.

**18.** Procédé selon l'une des revendication 1 ou 17, **caractérisé en ce que**, dans le module de traitement (S4') pour l'augmentation du glissement de consigne, le glissement de consigne (dn_soll) est déterminé selon la fonction de transition

$$\{dn\_soll(t\_E) = dn\_start + dn\_soll\_ziel - dn\_start] *$$

$$(t\_E/T\_E) \ EXP \ (1/P) + dn\_soll\_basis\}$$

avec (t_E) pour le temps d'augmentation, (T_E) pour la durée prédéterminée de l'augmentation du glissement de consigne, (dn_start) pour le glissement de consigne au démarrage, (dn_soll_ziel) pour le glissement de consigne recherché prédéterminé, (dn_soll_basis) pour le glissement de consigne de base prédéterminé et P pour un facteur de progression.

**19.** Procédé selon l'une des revendications 1 ou 17, **caractérisé en ce que**, dans le module de traitement (S4') pour l'augmentation du glissement de consigne, le glissement de consigne (dn_soll) est calculé selon la fonction de transition

$$\{dn\_soll(t\_E) = dn\_start + [dn\_soll\_ziel - dn\_start] *$$

$$sin \ ((\pi/2) * (t\_E/T\_E) \ EXP \ (P) + dn\_soll\_basis\}$$

avec (t_E) pour le temps d'augmentation, (T_E) pour la durée prédéterminée de l'augmentation du glissement de consigne, (dn_start) pour le glissement de consigne au démarrage, (dn_soll_ziel) pour le glissement de consigne recherché prédéterminé, (dn_soll_basis) pour le glissement de consigne de base prédéterminé et (P) pour un facteur de progression.

**20.** Procédé selon la revendication 18 ou 19, **caractérisé en ce que** la durée de l'augmentation du glissement de consigne (T_E) est déterminée en fonction d'une vitesse de rotation de glissement (dn_soll_diff) à dériver (dn_soll_diff) et d'un gradient de la vitesse de rotation de la turbine (n_Turb_grad), la vitesse de glissement à dériver (dn-soll_diff) représentant une différence entre le glissement de consigne recherché dn_soll-ziel et le glissement au démarrage dn_start.

**21.** Procédé selon la revendication 1 ou 17, **caractérisé en ce que**, pour l'augmentation du glissement de consigne, est calculé, dans le module de traitement (S4'), le glissement de consigne (dn_soll) selon la fonction

[dn_soll(t_E) = dn_start + dn_soll_grad * t_E + dn_soll_basis],

avec (t_E) pour le temps d'augmentation, (dn_start) pour le glissement de consigne de démarrage, (dn_soll_grad) pour le gradient du glissement de consigne et (dn_soll_basis) pour le glissement de consigne de base prédéterminé.

22. Procédé selon la revendication 1 ou l'une des revendications 17 à 21, **caractérisé en ce que** le module de traitement (S4') pour l'augmentation du glissement de consigne est interrompu lorsqu'une instruction "activation du convertisseur semi-automatique" ou une instruction "réduction du glissement de consigne" est détectée.

23. Procédé selon la revendication 18 ou 21, **caractérisé en ce que** le module de traitement (S4') pour l'augmentation du glissement de consigne est terminé lorsqu'il est détecté que la pression du convertisseur semi-automatique (p_WK) est inférieure ou égale à la pression de seuil (p_KW_schwell).

24. Procédé selon la revendication 19, **caractérisé en ce que** le module de traitement (S4') pour l'augmentation du glissement de consigne est terminé lorsqu'il est détecté que la durée prédéterminée de l'augmentation du glissement de consigne (T_E) est expirée.

25. Procédé selon la revendication 9 ou 21, **caractérisé en ce que** le gradient du glissement de consigne (dn_soll_grad) représente une fonction d'un gradient de la vitesse de rotation de la turbine (n_Turb_grad).

26. Procédé selon l'une des revendications 2 à 25, **caractérisé en ce que** le glissement de consigne recherché (dn_soll-ziel) est déterminé à partir d'un champ caractéristique

27. Procédé selon l'une des revendications 1 à 26, **caractérisé en ce qu'**en cas d'un résultat négatif de l'interrogation de la première fonction de discrimination (S1, S1'), une boucle d'attente (S2, S2') est lancée.

S1

WK
aktivieren

nein → S2

warten

ja

S3

dn_ist ≤ GW1    ja

nein

S4

Sollschlupf-Reduktion

S5

Rückkehr in das
Hauptprogramm

Fig. 1

S1'

WK
deaktivieren

nein → warten S2'

ja

S3'

Druckproportionale
Größe ≤ GW2

ja

nein

S4'

Sollschlupf-Erhöhung

S5'

Rückkehr in das
Hauptprogramm

Fig. 2

16

START

S6 — dn_start = dn_ist(t)
t_0 = t

S7 — t_R = t-t_0

S8 — dn_soll = f(t_R)

S10 — S9

Rückkehr in das
Hauptprogramm ← ja — Abbruchkriterium
erfüllt

nein

S11 — Endebedingung
erfüllt — nein

ja

ENDE

Fig. 3

S6' **dn_start = dn_soll(t)**
**t_0 = t**

S7' $t\_E = t - t\_0$

S8' $dn\_soll = f(t\_E)$

S10' Rückkehr in das Hauptprogramm

S9' Abbruch-kriterium erfüllt

ja

nein

S11' Ende-bedingung erfüllt

nein

ja

START

ENDE

Fig. 4

dn_soll[1/min]

Fig. 5

t_R/T_R

dn_soll[1/min]

Fig. 6

t_E/T_E